# EUROPEAN PATENT SPECIFICATION

(11) **EP 0 559 998 B1**
(45) Date of publication and mention of the grant of the patent: **07.02.1996**
(21) Application number: 92830405.4
(22) Date of filing: 22.07.1992
(51) Int. Cl.: F16K 11/074, F16K 39/04

(54) **Mixer valve for hot and cold water incorporating a pressure balancer**
Mischventil für heisses und kaltes Wasser mit Druckausgleicher
Mitigeur pour eau chaude et froide avec équilibreur de pression

(30) Priority: 11.03.1992 IT BS920026 U
(43) Date of publication of application: 15.09.1993
(73) Proprietor: SOL S.p.A., I-25065 Lumezzane S.S. (Brescia) (IT)
(72) Inventor: Otelli, Giordano, I-25065 Lumezzane S.S. (Brescia) (IT)
(74) Representative: Manzoni, Alessandro

(56) References cited:
- EP-A- 0 322 597
- WO-A-90/03533
- FR-A- 2 506 886
- FR-A- 2 570 792
- FR-A- 2 642 133
- US-A- 4 095 610

## Description

The present invention relates to hot and cold water mixer valves in sanitary units.

These mixer valves usually have a cartridge-type body with a base and a lid and incorporating a mixer unit made up from two overlapping ceramic plates. One plate is fixed to the base of the body; the other plate is controlled from the outside and is movable on and in respect to the fixed one. The fixed plate has two water inlet holes which connect with two conduits for the separate supplying of hot and cold water and one hole for the outlet of water towards the delivery mouth of the tap to which the valve is fitted. As far as the mobile plate is concerned it is movable through a control lever and has a mixing chamber which selectively joins one or both the water inlet holes with the outlet one.

A mixer valve according to the preamble of claim 1 is disclosed in FR-A-2642133.

It has already been proposed that said mixer valves be fitted with a pressure balancer on the side where there is the water inlet holes of the fixed plate, said pressure balancer having a known structure which is suitable for compensating the variations of the pressure of water coming from a distribution network and which prevents the flow to surge, therefore keeping the ratio of the capacity of the two types of water constant.

At present the application of such a balancer requires the availability and inserting of a suitable casing to conjugate to the body of the valve and which is designed to hold the balancer.

The aim of the present invention is to supply a mixer valve with a body which is configurated to render the fitting of a balancer simpler and more practical.

Another aim of the invention is to supply a mixer valve where the application of the balancer can be carried out without having to pre-arrange and insert added elements which always constitute sources of complications for both the assembly operations and for the resulting structure of the article as a whole.

To this end, the here proposed mixer valve is characterized with a body having a raised portion which is integral with its base, said raised portion having a chamber for holding a balancer and having passages for the inlet of water to the balancer and passages for the outlet of water from the balancer towards the plate-type mixer unit inside said body, the water coming out of the mixer unit towards the delivery mouth passing on the outside around said chamber. Further details of the invention will appear clearer following the description with references being made to the attached drawings in which:
- Fig. 1: is a partial section view of a mixer valve and of a separate pressure balancer;
- Fig. 2: is a view of the valve in Fig. 1 seen from the base;
- Fig. 3: is a variant where the slot in the cartridge-type body also acts as a body for the balancer; and
- Fig. 4: is a section view of the cartridge-type body in Fig. 3 with the balancer.

The cartridge-type body (10) of the mixer valve has a base (11) and a lid (12). The base (11) can be integral with the body and the lid (12) can be inserted and hooked to it or, on the contrary, the lid can be integral with the body and the base can be inserted. In each case the body (10) holds a fixed plate (13) sealed to the base (11) and a mobile plate (14) resting on and amovable on the fixed plate in a known way. The mobile plate (14) is controlled through a lever (15) which is connected to, guided and oscillating on the lid.

In accordance with the invention, the base (11) which is either integral or inserted and hooked to the body (10) has an integral raised portion (16), said rise having a chamber (17) designed to hold a pressure balancer (18).

Said chamber (17) has passages for the inlet of water which are open towards two conduits (not shown) for the supplying of hot and cold water and are joined to the base of the raised portion and has passages for the outlet of water which are open towards the plate-type mixer unit (13, 14) placed in the body.

The pressure balancer (18) has a structure and functioning which are already known and do not require particular attention.

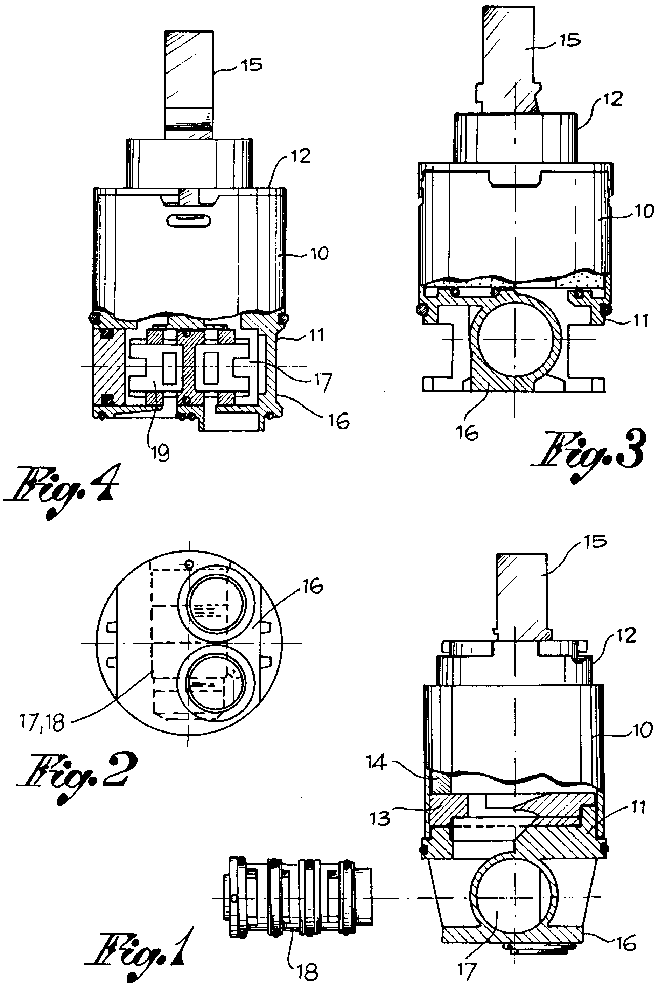

The balancer (18) in the embodiment shown in Figs. 1 and 2 forms a separate unit in the form of a cardridge and, as such, is inserted in the chamber (17) in order to act as balancer of the pressure of the water which goes through it before reaching the plate-type mixer unit (13, 14) and from there continuing towards the delivery mouth of a tap. Thus, the chamber (17) in such an embodiment only acts as a housing for the balancer (18).

On the other hand the chamber (17) in the embodiment shown in Figs. 3 and 4 also act as the body or casing of the balancer (18). In this case the functional elements (19) of the balancer are assembled and co-ordinated between each other directly in said chamber, therefore eliminating the external body or casing of the balancer itself when it forms an independent unit.

## Claims

1. A mixer valve for hot and cold water having a cartridge-type body (10) with a base (11) and a lid, said body holding a mixer unit made up from two plates one (13) of which is fixed to the base of the body and the other (14) movable through a control lever on and in respect to the fixed one, the fixed plate having two holes for the separate inlet of hot and cold water supplied through two conduits joined to the base and having a hole for the outlet of water from the valve towards the delivery mouth of a tap, characterized in that said body (10) has a raised portion (16) which is integral with its base (11), and in that said raised portion has a chamber (17) for holding a pressure balancer (18), said chamber having passages for the inlet of water to the balancer and passages for the outlet of water from the balancer towards the plate-type mixer unit inside said body, the water coming out of the mixer unit towards the delivery mouth passing on the outside around said chamber.

2. A mixer valve in accordance with claim 1, characterized in that the base (11) is integral or fitted to the cartridge-type body (10) and in that said chamber (17) holds a balancer as an independent unit complete with an external body or casing.

3. A mixer valve in accordance with claim 1, characterized in that the base (11) is integral or fitted to the cartridge-type body (10) and in that the components of a balancer are fitted and assembled into said chamber (17) which therefore acts as an external body or casing of the balancer.

## Patentansprüche

1. Ein Mischventil für heißes und kaltes Wasser mit einem Kartuschengehäuse (10) mit einem Boden (11) und einem Deckel, wobei das genannte, eine Mischeinheit enthaltende Gehäuse zwei Platten aufweist, von denen eine (13) am Boden des Gehäuses befestigt ist und die andere (14) mit einem Bedienungshebel auf und gegenüber der befestigten Platte bewegt werden kann, und wobei die befestigte Platte zwei Bohrungen für einen getrennten Einlaß von heißem Wasser und von kaltem Wasser aufweist, welches durch zwei am Boden angeschlossene Leitungen zugeführt wird; außerdem weist die Platte eine Bohrung zum Auslassen des Wassers aus dem Ventil zum Ausströmer eines Hahns auf, dadurch gekennzeichnet, daß das Gehäuse (10) einen erhobenen Abschnitt (16) aufweist, der sich innerhalb des Bodens (11) befindet, und dadurch, daß der erhobene Abschnitt (16) eine Kammer (17) zum Halten der Druckausgleichvorrichtung (18) aufweist, wobei die genannte Kammer einen Durchlaß für den Einlaß des Wassers in die Ausgleichvorrichtung und Durchgänge für den Auslaß des Wassers aus der Ausgleichvorrichtung zur Plattenmischereinheit in dem genannten Gehäuse aufweist und wobei das Wasser aus der Mischeinheit zum Ausströmer außerhalb der genannten Kammer gelangt.

2. Ein Mischventil gemäß Anspruch 1), gekennzeichnet durch die Tatsache, daß der Boden (11) in dem Gehäuse (10) enthalten oder an dem Kartuschengehäuse (10) befestigt ist, und dadurch, daß die genannte Kammer (17) eine Ausgleichvorrichtung als unabhängige Einheit vollständig mit einem äußeren Gehäuse oder einer Einfassung enthält.

3. Ein Mischventil gemäß Anspruch 1), gekennzeichnet durch die Tatsache, daß der Boden (11) in dem Gehäuse (10) enthalten oder an dem Kartuschengehäuse (10) befestigt ist, und dadurch, daß die Komponenten der Ausgleichvorrichtung in der genannten Kammer (17) enthalten und montiert sind, welche somit als äußeres Gehäuse oder Einfassung der Ausgleichvorrichtung dient.

## Revendications

1. Une valve mélangeuse d'eau chaude et froide comprenant un carter du type à cartouche (10) ayant une base (11) et un couvercle, ledit carter renfermant un groupe mélangeur constitué par deux plaques, dont l'une (13) est fixée à la base du carter et l'autre (14) est mobile, actionnée par un levier situé sur la plaque fixe et mobile par rapport à celle-ci, la plaque mobile présentant deux trous pour l'amenée séparée de l'eau chaude et froide, l'amenée s'effectuant par deux conduits reliés à la base et ayant un trou pour la sortie de l'eau de la valve vers l'orifice de distribution d'un robinet; ledit carter (10) présente un secteur surélevé (16) constituant un ensemble intégral avec la base (11), ledit secteur surélevé ayant une chambre (17) logeant un équilibreur de pression (18); ladite chambre possède des voies pour l'entrée de l'eau dans l'équilibreur et des voies pour la sortie de l'eau de l'équilibreur vers le groupe mélangeur à plaques situé dans le carter, l'eau sortant du groupe mélangeur vers l'orifice de distribution du robinet en contournant ladite chambre de l'extérieur.

2. Une valve mélangeuse conforme à la revendication 1, caractérisée par le fait que la base (11) forme un ensemble intégral avec le carter type cartouche (10) ou est fixée sur celui-ci, et par le fait que la chambre (17) contient un équilibreur constituant une unité indépendante munie d'un carter ou d'une enveloppe extérieure.

3. Une valve conforme à la revendication 1, caractérisée par le fait que la base (11) forme un ensemble intégral avec le carter type cartouche (10) ou est fixée sur celui-ci, et par le fait que les composants de l'équilibreur sont logés et assemblés dans la chambre (17), laquelle constitue de ce fait le carter ou enveloppe extérieure de l'équilibreur.
